## Europäisches Patentamt
## European Patent Office
## Office européen des brevets

(19)

(11) Veröffentlichungsnummer: **0 269 615**
**B1**

(12) **EUROPÄISCHE PATENTSCHRIFT**

(45) Veröffentlichungstag der Patentschrift: **31.10.90**

(51) Int. Cl.⁵: **A 47 G 19/00**

(21) Anmeldenummer: **86903232.6**

(22) Anmeldetag: **02.06.86**

(86) Internationale Anmeldenummer:
**PCT/DE86/00229**

(87) Internationale Veröffentlichungsnummer:
**WO 88/00807 11.02.88 Gazette 88/04**

(54) STAPELBARE GEFÄSSE.

(43) Veröffentlichungstag der Anmeldung:
**08.06.88 Patentblatt 88/23**

(45) Bekanntmachung des Hinweises auf die
Patenterteilung:
**31.10.90 Patentblatt 90/44**

(84) Benannte Vertragsstaaten:
**BE CH LI LU NL SE**

(56) Entgegenhaltungen:
**DE-C- 445 407**
**FR-A-2 164 744**
**FR-A-2 367 459**
**GB-A- 928 857**
**US-A-2 627 991**

(73) Patentinhaber: **Strunkmann-Meister, Karl E. Dr.
jur.**
**Clemensstrasse 78**
**D-8000 München 40 (DE)**

(72) Erfinder: **Strunkmann-Meister, Karl E. Dr. jur.**
**Clemensstrasse 78**
**D-8000 München 40 (DE)**

(74) Vertreter: **Patentanwälte Kirschner & Grosse**
**Forstenrieder Allee 59**
**D-8000 München 71 (DE)**

EP 0 269 615 B1

Courier Press, Leamington Spa, England.

## Beschreibung

Die Erfindung betrifft ein Geschirrgefäß, bestehend aus insbesondere als Teller oder Topf verwendbaren Gefäßteilen, bei dem die Gefäßteile auf einem Randstreifen Profilierungen aufweisen, die im Querschnitt, d.h. in Richtung des Randstreifens, Erhöhungen und Vertiefungen sind und im Längsschnitt, d.h. senkrecht zum Querschnitt, aus dem Randstreifen hervortretende Erhöhungen und/oder in den Randstreifen hineinlaufende Vertiefungen sind, wobei die Profilierungen zweier aufeinandergesetzter, einander zugekehrter Gefäßteile formschlüssig ineinandergreifen.

Der Hauptvorteil des erfindungsgemäßen Geschirrgefäßes besteht darin, daß die Seitenretension der im Sinne eines geschlossenen Gefäßes verwendeten Aufnahmegefäße und Deckel gegeneinander dadurch verstärkt wird, daß die Vertiefungen und Erhöhungen über zur Berührungsfläche im wesentlichen senkrecht stehende, parallel zum Gefäßrand verlaufende Wangen verfügt, wobei die solchermaßen in die Berührungsfläche hineinragenden Vertiefungen den Wangen der ineinandergreifenden Erhöhungen und Vertiefungen den größtmöglichen Widerstand gegen seitliches Verrutschen entgegensetzen.

Bei den verschiedensten Gegenständen, insbesondere bei Kleinteilen und Materialien, vor allem bei Speisen und deren Bestandteilen, tritt das Bedürfnis auf, diese unter Verwendung üblicher Gefäße abgeschlossen zu lagern. Besonders beim Erwärmen oder Warmhalten von Speisen in Öfen besteht das Bedürfnis, die Speisen z.B. in den üblichen Porzellantellern in den Ofen zu geben. Das Problem der Abdeckung wurde hierbei bislang in der Weise gelöst, daß z.B. ein tiefer Teller mit einem flachen Teller abgedeckt wurde oder daß auf einen flachen Teller ein umgekehrter tiefer Teller als Deckel aufgelegt wurde. Weiterhin sind für diesen Zweck besondere Behältnisse bekannt, die aber die Nachteile aufweisen, daß man den Deckel nur als Deckel und nicht z.B. als Teller verwenden kann und daß in den seltensten Fällen diese Behältnisse übereinander gestapelt werden können, um vor allem den beschränkten Raum in modernen Öfen zu nutzen, bei denen z.B. Mikrowellen zur Energieübertragung verwendet werden.

Ein Geschirrgefäß der eingangs genannten Art ist aus der FR-A-2164744 bekannt. Die Profilierungen bei diesem bekannten Gefäß erstrecken sich nur geringfügig über und unter die Oberfläche des Gefäßrandstreifens. Die Profilierungen zweier aufeinandergesetzter, einander zugekehrter Gefäßteile greifen formschlüssig ineinander.

Aus der US-PS 2 627 991 ist ein Geschirrgefäß bekannt, das auf seinem Randstreifen und an seinem Boden Vorsprünge und Vertiefungen hat, die beim Aufeinanderlegen zweier Geschirrteile ineinandergreifen.

Demgegenüber ist es Aufgabe der Erfindung das gegenseitige seitliche Verrutschen von Aufnahmegefäß und Deckel zu verhindern. Diese Aufgabe wird bei einem gettungsgemäßen Geschirrgefäß erfindungsgemäß dadurch gelöst, daß die die sinas- oder cosinusförmig verlaufenden Erhöhungen und Vertiefungen zu den waagerechten Berührungsflächen der einander zugekehrten Gefäßteile senkrechtstehende, parallel zum Gefäßrand verlaufende Wangen aufweisen und an ihren übrigen Seiten in Berührungsflächen der Randstreifen übergehen.

Bei dem erfindungsgemäßen Geschirrgefäß wird erreicht, daß jeweils zwei der übereinandergestapelten Gefäße, die ein geschlossenes Gefäß bilden, eine möglichst weitgehende Abdichtung erhalten und ein seitliches Verrutschen der Gefäße gegeneinander verhindert wird, indem die Wangen beim formschlüssigem Ineinandergreifen der gleichförmig gestalteten Öffnungen und Böden der einzelnen Gefäßteile aneinander angreifen. Jedes Gefääß kann sowohl als Aufnahmegefäß, in welchem das aufzunehmende Gut ruht, als auch — umgekehrt auf das Aufnahmegefäß aufgelegt — als Deckel dienen, so daß durch Auflegen des Deckels auf das Aufnahmegefäß ein geschlossenes Gefäß gebildet wird, wobei die Berührungsflächen der Gefäßteile eine waagerechte Gestaltung haben. Weiterhin wird der Nachteil von besonders geformten Gefäßen vermieden, der darin besteht, daß bei Verlust entweder des Aufnahmegefäßes oder des Deckels der verbleibende Teil des Behälters praktisch wertlos wird. Zum anderen werden beim Servieren der Speisen dadurch Arbeitsgänge erspart, daß man den als Deckel verwendeten Teller als Unterteller benutzt, wodurch sich ein Abtransport, der im Fall eines unpassenden Tellers oder einer eigens geformten Abdeckung nötig wird, erübrigt. Dies dient insbesondere der Steigerung der Arbeitseffizienz in der Gastronomie.

Im übrigen kann die Erfindung überall dort eingesetzt werden, wo etwas in Behältnissen gelagert werden muß und ein Bedürfnis nach Konfektionierung der Behältnisse, nach Vereinfachung der Lagerung und Ersatzbeschaffung sowie einer Steigerung der Anwendungsmöglichkeiten der Behältnisse besteht. Ein weiteres Beispiel aus der Gastronomie ist die Verwendung der erfindungsgemäßen Geschirrgefäße für das Einfrieren und Lagern eingefrorener Speisen.

Eine vorteilhafte Ausgestaltung des erfindungsgemäßen Geschirrgefäßes ist dadurch gekennzeichnet, daß auf der Unterseite des Gefäßteils abwechselnd Vertiefungen und Erhöhungen eingelassen bzw. aufgesetzt sind, die formschlüssig ineinandergreifen, wenn zwei Gefäßteile mit einander zugekehrten Unterseiten übereinanderliegen. Durch die auf den Gefäßunterseiten (= Berührungsflächen der geschlossenen Gefäße) abwechselnd angebrachten, formschlüssig ineinandergreifenden Erhöhungen und Vertiefungen wird ein gegenseitiges, seitliches Verrutschen der Gefäßteile verhindert, wenn sie mit den Unterseiten aufeinander ruhen so daß die Möglichkeit geschaffen sind, Gerichte, die auf dem Teller serviert werden, z.B. auf einem Tablett, nicht nur nebeneinander sondern auch übereinander zu stellen, wodurch die Leistungsfähigkeit und Schnelligkeit der Bedienung enorm gesteigert werden können, was auch für das Servieren von Speisen im Haushalt gilt.

Eine weitere vorteilhafte Ausgestaltung des erfindungsgemäßen Geschirrgefäßes ist dadurch gekennzeichnet, daß die Erhöhungen und Vertiefungen ein umlaufendes Band bilden. Bei einem solchen Band bilden die Erhöhungen und Vertiefungen in Seitenansicht ein sinus-kosinusförmiges, um die waagerechte Berührungsfläche schwingendes Wellenlinienband.

Schließlich ist eine weitere vorteilhafte Ausgestaltung des erfindungsgemäßen Geschirrgefäßes dadurch gekennzeichnet, daß die Gefäßteile aus nachgiebigem Material bestehen und daß die Erhöhungen und die Vertiefungen einrastbar sind. Die Gefäßteile können aus Metall oder Kunststoff hergestellt so ausgebildet sein, daß ein geschlossenes Gefäß nur unter gewissem Kraftaufwand wieder geöffnet werden kann, und solchermaßen verbundene, geschlossene Gefäßteile nur unter gewissem Kraftaufwand wieder getrennt werden können.

Ausführungsbeispiele der Erfindung werden nun anhand der beiliegenden Zeichnungen beschrieben. Es zeigen:

Fig. 1 eine Seitenansicht von Gefäßteilen im Schnitt;

Fig. 2 eine Draufsicht auf ein Geschirrgefäß nach einem Ausführungsbeispiel der Erfindung;

Fig. 3 einen Schnitt durch drei aufeinandergestapelte Gefäßteile; und

Fig. 4 einen Schnitt durch einen Abschnitt der Randstreifen zweier aufeinandergelegter Geschirrteile.

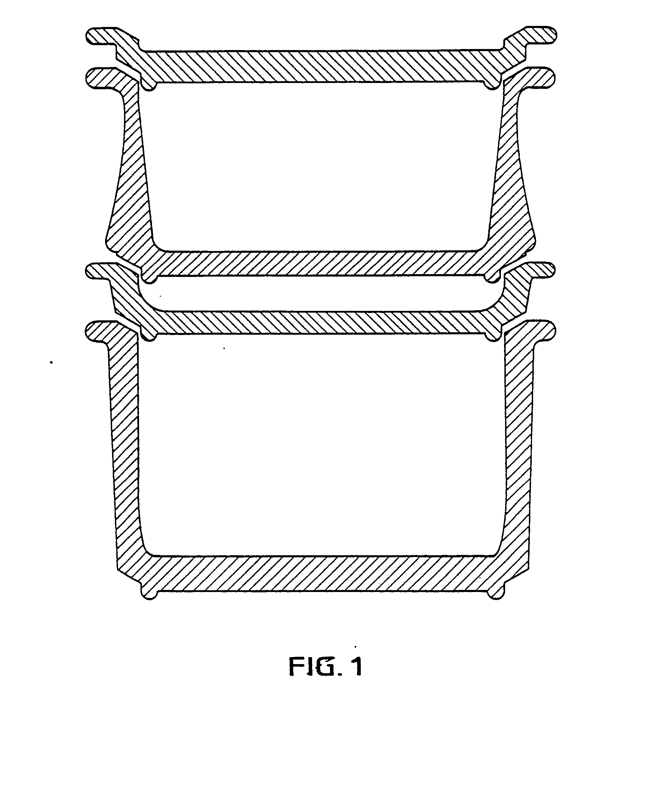

Fig. 1 der Zeichnung zeigt Gefäßteile, insbesondere einen tiefen Topf, auf dem ein tiefer Teller als Deckel ruht, auf welchem eine flachere Schüssel ruht, die wiederum durch einen flachen Teller als Deckel abgedeckt ist, Bei all diesen Gefäßteilen ist der Durchmesser der oberen Öffnung derselbe. Das auf der Unterseite dieser Gefäßteile umlaufende Band von Erhöhungen und Vertiefungen ist so gestaltet, daß es in die Öffnung eines der vorbeschriebenen Gefäßteile formschlüssig eingreift, seitliches Verrutschen des aufgesetzten Gefäßteils gegenüber dem darunter befindlichen Aufnahmegefäßteil verhindert und als Dichtleiste dient. Im Ausführungsbeispiel der Fig. 1 wird zudem gezeigt, wie eine abgeschrägte Gestaltung der Berührungsflächen der Gefäßteile über die dadurch erzielte konisierende Wirkung eine Erhöhung der Dichtleistung herbeiführen kann. Das umlaufende Band kann auch als umlaufende Noppenleiste ausgeführt werden, um z.B. mit Gefäßteilen kombiniert werden zu können, die auf ihren Unterseiten ebenfalls formschlüssig ineinandergreifende Erhöhungen oder Vertiefungen aufweisen.

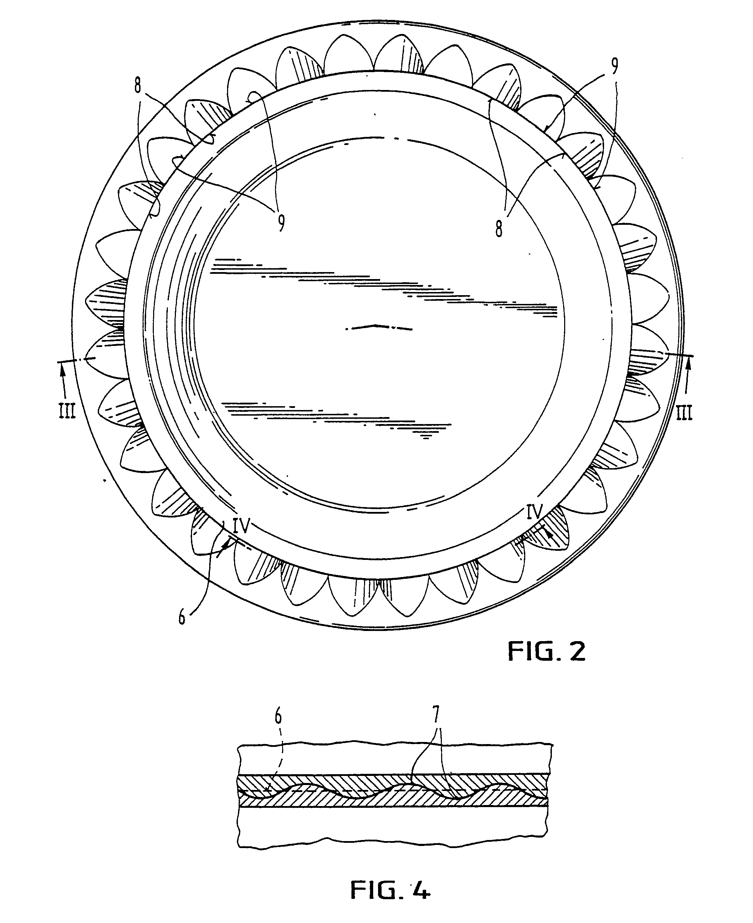

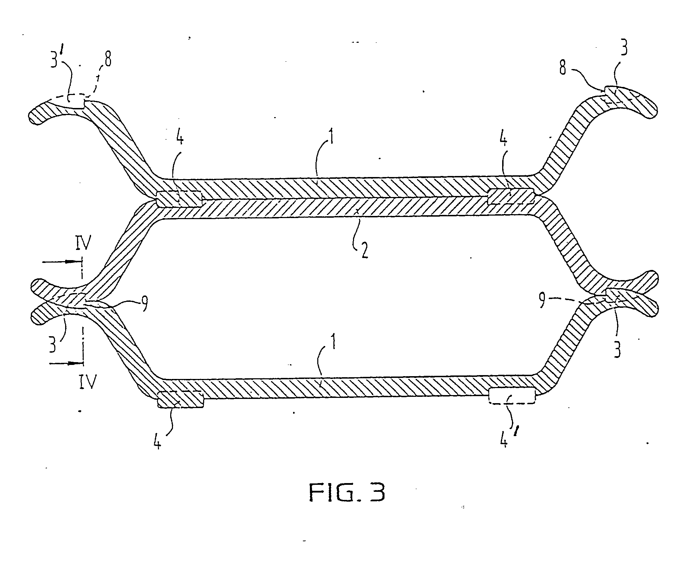

Fig. 2 zeigt ein Gefäßteil, insbesondere einen Teller, in der Draufsicht. Fig. 3 zeigt mehrere im Sinne von Aufnahmegefäßteil und Deckelgefäßteil aufeinandergelegte und übereinandergestapelte Teller. Hierbei greifen die sinusförmig über die waagerecht ausgebildete Berührungsfläche 6 hinausragenden Erhöhungen 3 und Vertiefungen 3' in die in die waagerechte Berührungsfläche des anderen Tellers kosinusförmig eingedrückten Vertiefungen 3' und Erhöhungen 3 ein. Die erhöhte Seitenretension wird hierbei durch die in der Kreiskrümmung senkrecht über die waagerechte Berührungsfläche herausragenden Wangen 8 bzw. in die waagerechte Berührungsfläche hineinversenkten Wangen 9 der Erhöhungen und Vertiefungen erreicht. Die ineinander übergehenden, sinus-kosinusförmig um den Tellerrand schwingenden Erhöhungen und Vertiefungen bilden dabei ein auf dem Tellerrand umlaufendes Band 5.

Auf der Unterseite der Gefäßteile sind alternierend Erhöhungen 4 und Vertiefungen 4' so eingelassen bzw. aufgesetzt, daß sie ineinandergreifen, wenn die Gefäßteile mit den Unterseiten zueinander übereinanderliegen, so daß auch bei einem Übereinanderstapeln der durch die Teller-Gefäßteile gebildeten geschlossenen Gefäße die Gefahr des Gegeneinanderverrutschens gebannt ist.

Fig. 4 zeigt einen Ausschnitt der Randstreifen der aufeinandergelegten Tellergefäßteile in der seitlichen Draufsicht und läßt deutlich erkennen, wie die über die aufeinanderliegenden waagerechten Berührungsflächen 6 hinausragenden Erhöhungen und Vertiefungen bei unmittelbarer Aneinanderreihung und entsprechender Gestaltung eine sinus-kosinusförmige Linie 7 ergeben.

Die mit Fig. 2 bis 4 dargestellte Ausführungsform ist deswegen besonders vorteilhaft, weil die gestellte Aufgabe mit sparsamsten Mitteln in dem Sinne gelöst wird, daß der oberflächliche Betrachter, insbesondere also der Gast, der von einem derartig geformten Teller ißt, die wellenförmige Ausbildung des Tellerrandes als eine zwar eigenartige, nicht aber als eine völlig ungewöhnliche und daher gewöhnungsbedürftige ästhetische Gestaltung empfinden wird. Dies ist wegen der Akzeptanz und damit für den Markterfolg der Erfindung von besonderer Bedeutung. Die hier gebotene Lösung stellt einen erheblichen Fortschritt im Handling in einer anscheinend nur ästhetisch bedingten Form dar, wodurch die enorme Steigerung des Zusatznutzens werbemäßig voll durchschlagen kann.

**Patentansprüch**

1. Geschirrgefäß bestehend aus insbesondere als Teller oder Topf verwendbaren Gefäßteilen, bei dem die Gefäßteile auf ihrem Randstreifen (6, 16) Profilierungen aufweisen, die im Querschnitt, d.h. in Richtung des Randstreifens (6, 16), Erhöhungen (3) und Vertiefungen (3') sind und im Längsschnitt, d.h. senkrecht zum Querschnitt, aus dem Randstreifen hervortretende Erhöhungen (4) und/oder in den Randstreifen hineinlaufende Vertiefungen (4') sind, wobei die Profilierungen zweier aufeinandergesetzter, einander zugekehrter Gefäßteile formschlüssig ineinandergreifen,

dadurch gekennzeichnet,

daß die sinus- oder cosinusförmig verlaufenden Erhöhungen (3) und die Vertiefungen (3') zu den waagrechten Berührungsflächen (6) der einander zugekehrten Gefäßteile senkrechtstehende, parallel zum Gefäßrand verlaufende Wangen (8, 9) aufweisen und an ihren übrigen Seiten in Berührungsflächen (6) der Randstreifen übergehen.

2. Geschirrgefäß nach Anspruch 1, dadurch gekennzeichnet, daß auf der Unterseite des Gefäßteils (1) abwechselnd Vertiefungen und Erhöhungen eingelassen bzw. aufgesetzt sind, die formschlüssig ineinandergreifen, wenn zwei Gefäßteile (1, 2) mit einander zugekehrten Unterseiten übereinanderliegen.

3. Geschirrgefäß nach Anspruch 1 oder 2, dadurch gekennzeichnet, daß die Erhöhungen und Vertiefungen ein umlaufendes Band bilden.

4. Geschirrgefäß nach einem der Ansprüche 1 bis 3, dadurch gekennzeichnet, daß die Gefäßteile (1, 2) aus nachgiebigem Material bestehen und daß die Erhöhungen in die Vertiefungen einrastbar sind.

**Revendications**

1. Piéce de vaiselle constituée par des parties de récipient pouvant notamment être utilisées en tant qu'assiette ou écuelle, dans laquelle les parties de récipient présentent sur leur bordure marginale (6, 16) des profilages constitués en coupe traversale, c'est-à-dire dans la direction de la bordure marginale (6, 16), par des protubérances (3) et des creusures (3') et en coupe longitudinale, c'est-à-dire perpendiculairement à la section transversale, par des protubérances (4) qui dépassent au-delà de la bordure marginale et/ou des creusures (4') qui pénètrent dans cette bordure marginale, les profilages de deux parties superposées du récipient, mutuellement opposées, s'imbriquant les uns dans les autres par concordance de formes, caractérisée par le fait que les protubérances (3) et les creusures (3') courrants sinusoïdamment ou cosinusoïdamment comportent des joues (8, 9) perpendiculaires aux surfaces de contact (6) des parties du récipient sur leurs faces inférieures et parallèles à la bordure du récipient et par les côtés restants fusionnent dans des surface de contact (6) de la bordure marginale.

2. Piéce de vaiselle selon la revendication 1, caractérisée par le fait que sur la face inférieure de la partie (1) du récipient des creusures et des protubérances sont respectivement ménagées ou rapportées en alternace, s'imbriquant les unes dans les autres par concordance de formes lorsque deux parties (1, 2) du récipient sont superposées avec leurs faces inférieures tournées les unes vers les autres.

3. Pièce de vaiselle selon la revendication 1 ou 2, caractérisée par le fait que les protubérances et creusures forment un ruban périphérique.

4. Pièce de vaiselle selon l'une des revendications 1 à 3, caractérisée par le fait que les parties (1) du récipient consistent en un matériau souple et par le fait que les protubérances peuvent être emboîtées par déclic dans les creusures.

**Claims**

1. Vessel consisting of vessel components in particular utilizable as plate or pot, in which the vessel components have profiled contours on their marginal rims (6, 16) which in cross-sectional area, i.e. in direction of the marginal rim (6, 16), are elevations (3) and depressions (3') and in longitudinal section, i.e. perpendicular to the cross-section, are elevations (4) protruding from the marginal rim and/or depressions (4') merging into the marginal rim, wherein the profiled contours of two facing vessels components placed one on top of the other interlock positively, characterized in that the sinusoidally or cosinusoidally running elevations (3) and the depressions (3') have cheeks (8, 9) being perpendicular to the horizontal areas of contact (6) of facing vessel components and being parallel to the vessel rim and with the remaining sides merge into contact surfaces (6) of the marginal rims.

2. Vessel according to claim 1, characterized in that on the bottom face of the vessel component (1) alternating depressions and elevations are impressed or elevated, which interlock positively when two vessel components (1, 2) are placed one on top of the other with facing bottom surfaces.

3. Vessel according to claim 1 or 2, characterized in that the elevations and depressions form a circumferential band.

4. Vessel according to one of the claims 1 to 3, characterized in that the vessel components (1, 2) are made of resilient material and that the elevations are interlockable with the depressions.

FIG. 1

EP 0 269 615 B1

FIG. 2

FIG. 4

FIG. 3